Europäisches Patentamt

European Patent Office

Office européen des brevets

(11) Numéro de publication: **0 315 529**
**A1**

## (12) DEMANDE DE BREVET EUROPEEN

(21) Numéro de dépôt: **88402755.8**

(22) Date de dépôt: **03.11.88**

(51) Int. Cl.⁴: **G 06 F 15/06**
**G 06 F 15/31**

(30) Priorité: **06.11.87 FR 8715420**

(43) Date de publication de la demande:
**10.05.89 Bulletin 89/19**

(84) Etats contractants désignés: **DE GB IT**

(71) Demandeur: **THOMSON-CSF**
**173, Boulevard Haussmann**
**F-75379 Paris Cédex 08 (FR)**

(72) Inventeur: **Dartois, Luc**
**THOMSON-CSF SCPI 19, avenue de Messine**
**F-75008 Paris (FR)**

**Lenormand, Eric**
**THOMSON-CSF SCPI 19, avenue de Messine**
**F-75008 Paris (FR)**

(74) Mandataire: **Lincot, Georges et al**
**THOMSON-CSF SCPI**
**F-92045 PARIS LA DEFENSE CEDEX 67 (FR)**

(54) **Machine multiprocesseur reconfigurable pour traitement du signal.**

(57) La machine comprend K voies de signaux différentes. Les signaux sont convertis sous la forme d'échantillons numériques par K convertisseurs analogiques-numériques ($8_1$ à $8_K$) reliés respectivement à chacune des voies. N processeurs élémentaires monolithiques ($1_1$ à $1_N$) sont reliés, par l'intermédiaire d'un bus d'acquisition d'échantillons (7) commun à l'ensemble de K convertisseurs analogiques-numériques ($8_1$ à $8_K$). Ils sont également reliés par un bus en anneau (2) commun à l'ensemble des processeurs ($1_1$ à $1_N$) pour permettre la circulation entre processeurs des résultats de calcul effectués sur les échantillons reçus par chacun d'eux. Une unité de commande (3) et au moins un automate de transfert (6), synchronisés par un signal d'horloge commun commandent respectivement d'une part l'exécution des calculs à effectuer par les processeurs ($1_1$ à $1_N$) sur les échantillons qu'ils reçoivent ainsi que d'autre part, le transfert des échantillons sur le bus d'acquisition (7) et le transfert des résultats de calcul entre processeurs sur le bus en anneau (2).

Application : récepteurs radioélectriques

FIG_1

EP 0 315 529 A1

## Description

### Machine multiprocesseur reconfigurable pour traitement du signal

La présente invention concerne une machine multiprocesseur reconfigurable pour traitement du signal.

Elle s'applique notamment aux réalisations de récepteurs radioélectriques, de radiogoniométres, de radars ou de sonars et de façon générale à celles de tous dispositifs de traitement du signal, où l'exécution des traitements nécessitent une grande puissance de calcul avec un fort taux de parallélisme dans les algorithmes.

Dans les machines multiprocesseurs pour traitement du signal connues, les puissances de calcul mises en oeuvre dépendent des algorithmes, des types de traitements et du nombre de raies du spectre du signal. Ces puissances varient aujourd'hui typiquement de une à quelques centaines de millions d'opérations par seconde. Suivant les applications envisagées, le nombre de voies de réception des récepteurs ou des capteurs utilisés pour la saisie des signaux peut varier entre quelques unités et quelques centaines d'unités et les bandes passantes sont plus ou moins larges en fonction des débits qui peuvent aller jusqu'à quelques dizaines de millions d'échantillons par seconde.

Dans beaucoup d'applications le débit est continu et doit être traité en temps réel au fur et à mesure de l'arrivée des échantillons, d'une part parce que le volume mémoire disponible est limité, et d'autre part, pour ne pas perdre d'informations.

Par ailleurs certaines applications comme celles relatives aux détections d'alarmes dans les goniomètres imposent un temps de réponse faible entre le moment où l'information rentre dans la machine et celui où les résultats sont disponibles.

Dans la plupart des applications précitées, la majeure partie des traitements réalisés a un caractère répétitif dans le temps, c'est-à-dire que périodiquement les mêmes tâches sont recommencées. Parmi ces traitements certains ont des récurren ces plus courtes que d'autres et d'autres présentent différentes symétries.

Toutes ces caractéristiques conduisent les concepteurs de matériels à définir des architectures particulières plus ou moins bien adaptées à un tel ou tel type de traitement.

Parmi ces architectures, il existe celles connues sous l'abréviation MIMD du terme anglo-saxon "Multiple instruction Multiple Data" et celles connues sous l'abréviation SIMD du terme anglo-saxon "Single Instruction Multiple Data". L'architecture MIMD qui permet d'exécuter des instructions différentes au cours d'un même cycle machine est la plus générale, car elle permet de traiter tous les types de problèmes. Elle est constituée de plusieurs processeurs ayant leurs propres séquenceurs. Chaque processeur est en général dédié à un type de traitement et tous les traitements exécutés par l'ensemble des processeurs sont chaînés. Il en résulte que toute modification majeure de la chaîne de traitement est susceptible de remettre en cause l'architecture globale du système multiprocesseur.

D'autre part, si la chaîne présente des rebouclages ceux-ci entraînent des difficultés de synchronisation qui compliquent la mise au point du logiciel.

De plus, une telle structure, souvent utilisée en "pipeline", c'est-à-dire, dans un mode où les informations transitent sur un bus commun aux processeurs et sont traités successivement par les processeurs peut présenter un temps de réponse important.

L'architecture SIMD qui permet d'exécuter un programme unique en simultanéité sur chaque processeur sur des données propres à chacun d'eux est beaucoup plus homogène et régulière mais elle suppose que les traitements eux aussi sont homogènes et réguliers et présentent diverses symétries. Un des inconvénients majeurs résulte du fait que la même instruction doit être exécutée exactement au même instant dans chaque opérateur. Il en résulte l'impossibilité de réaliser des traitements, même très peu différents, sur les différentes composantes d'un vecteur sans baisser notablement le rendement de la machine.

En ce qui concerne les échanges de données, une amélioration a été apportée aux structures SIMD pour leur donner les avantages des structures MIMD et optimiser les occupations mémoires mais uniquement pour des traitements présentant une "symétrie temporelle". Un dispositif correspondant est par exemple décrit dans la demande de brevet français N° 83 15649.

Cependant tous les types de machines SIMD présentent l'inconvénient de posséder un ou plusieurs organes de séquencement volumineux et complexes, souvent difficiles à programmer et manquant de rapidité pour l'enchaînement et la synchronisation des tâches à exécuter.

Pour rendre une machine de traitement du signal plus souple et plus adaptable, il faudrait non seulement qu'elle puisse accueillir avec un bon rendement les différents types de traitement, mais encore, qu'elle ne provoque pas de blocage au niveau des flots de données. Elle devrait donc pouvoir reconfigurer ses flots de données, tant ceux d'entrée que ceux liés aux tâches courantes et cela dynamiquement.

Le but de l'invention est de pallier les inconvénients précités.

A cet effet, l'invention a pour objet, une machine multiprocesseur reconfigurable pour traitement du signal du type dans laquelle les signaux analogiques à traiter sont reçus de K voies de signal différentes et convertis sous la forme d'échantillons numériques par K convertisseurs analogiques-numériques reliés respectivement à chacune des voies caractérisée en ce qu'elle comprend, d'une part, N processeurs élémentaires monolithiques de traitement du signal reliés, par l'intermédiaire d'un bus d'acquisition d'échantillons commun à l'ensemble des N processeurs, aux K sorties d'échantillons des K convertisseurs analogiques-numériques et également reliés par un bus en anneau commun à l'ensemble des N processeurs pour permettre la circulation entre processeurs des résultats de calcul effectués sur les échantillons reçus par chacun d'eux et d'autre part, une unité de commande et au moins un automate de transfert, synchronisés par un signal d'horloge commun pour commander respectivement d'une part l'exécution des calculs à effectuer par les processeurs sur les échantillons qu'ils reçoivent ainsi que d'autre part, le transfert des échantillons sur le bus d'acquisition et le transfert des résultats de calcul entre processeurs sur le bus en anneau.

L'invention a principalement pour avantage qu'elle permet d'effectuer des transferts de données et des calculs de façon simultanée grâce à la séparation des organes de séquencement respectifs. On obtient ainsi un meilleur rendement. Elle a également les avantages, de conduire à des réalisations simples de chaque processeur. Un autre avantage est que la machine proposée peut être construite autour d'un seul type de processeur appelé processeur élémentaire utilisé $(n+2)$ fois, deux processeurs étant dédiés à la gestion et au séquencement de la machine les n autres constituant la structure reconfigurable. Cette structure permet également un fonctionnement de la machine en mode SIMD ou en mode MIMD.

Un autre avantage est que, le séquencement des calculs est assuré seulement par deux processeurs. De ce fait, le séquencement des transferts de données est totalement indépendant et ne présente aucun problème de partage de ressources communes avec les processeurs de calcul, grâce au fait que les transferts sont gérés par deux automates programmables quasi indépendants. La machine peut ainsi être avantageusement perçue par les utilisateurs comme étant composée de trois processeurs virtuels, deux processeurs étant spécialisés pour les transferts et un processeur étant réservé aux calculs, les transferts se faisant chacun sur un bus indépendant et simultanément avec une tâche de calcul. Le fait que chaque processeur est connecté aux deux bus de transfert donne un maximum de souplesse aux échanges de données.

La particularité des deux types de transfert est qu'elle permet de définir pour chaque bus indépendant, la ou les sources d'informations et la ou les destinations à chaque cycle de la machine, un des deux bus étant réservé à l'acquisition d'échantillons et le deuxième en anneau, aux données véhiculées entre processeurs et sur les interfaces entrée-sortie. Les moyens d'interface mémoire en répartissant les sous cycles d'accès mémoire relativement aux tâches calcul et transfert permettent à chaque cycle machine de s'affranchir des problèmes de conflit lors des accès mémoires. De la sorte, les processeurs calcul et de transfert travaillent avec les mêmes cycles de base et de façon synchrone.

Le résultat est que l'on obtient un mode de fonctionnement optimal de la machine, où trois tâches peuvent être lancées simultanément, celles-ci étant décomposables en une tâche de transfert sur chacun des deux bus et une tâche de calcul en mode SIMD ou MIMD, les trois tâches étant exécutées en parallèle sans conflits entre calcul et transferts et de même durée chacune. Cela permet d'enchaîner ensuite le traitement sur un autre triplet de tâches, l'extraction d'un triplet de tâches ayant lieu en quelques cycles machine sous contrôle d'un des processeurs élémentaires.

Naturellement à chaque activation d'une tâche de calcul la machine peut être reconfigurée sans perte de temps soit, en mode SIMD soit, en mode MIMD, et les transferts de données peuvent être reconfigurésà tout instant en sous groupes différents sur les processeurs élémentaires.

D'autres caractéristiques et avantages de l'invention apparaîtront ci-après à l'aide de la description faite en regard des dessins annexés qui représentent :

- la figure 1 un schéma synoptique général d'une machine multiprocesseur selon l'invention ;
- la figure 2 un schéma synoptique d'un processeur élémentaire et son environnement mémoire ;
- la figure 3 un exemple du circuit d'interface mémoire pour processeur élémentaire selon l'invention ;
- la figure 4 un schéma synoptique d'automates pour séquencement des transferts selon l'invention ;
- la figure 5 un schéma de réalisation du processeur de commande et du processeur pilote formant l'unité de commande de la figure 1 ;
- la figure 6A un chronogramme pour expliquer le processus d'acquisition d'échantillons selon l'invention ;
- la figure 6B un exemple de chronogramme exploitant la répartition temporelle des accès aux mémoires des processeurs élémentaires selon l'invention ;
- la figure 7A un exemple d'enchaînement de tâches réalisé couramment dans le calcul d'une transformée de Fourier rapide ;
- la figure 7B l'enchaînement des tâches de l'exemple précédent mis en oeuvre avec une machine selon l'invention.

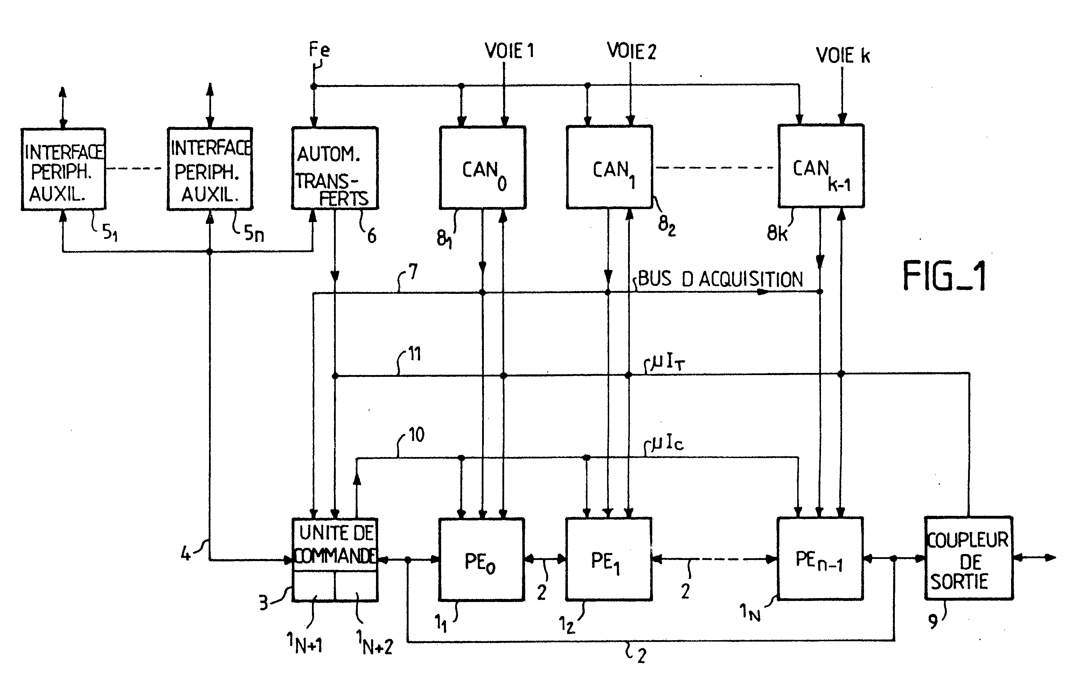

L'architecture globale d'une réalisation de la machine est donnée sur la figure 1. Elle est constituée de $N+2$ processeurs élémentaires de traitement du signal, référencés de $1_1$ à $1_{N+2}$ où N est un entier naturel quelconque. Ces processeurs ont des structures de base identiques. N d'entre eux, numérotés de $1_1$ à $1_N$ constituent la partie opérative de la machine. Ils sont reliés entre eux par un bus en anneau 2 de façon à permettre des échanges de données interprocesseurs en cours de traitement.

Les deux derniers processeurs $1_{N+1}$, $1_{N+2}$ disposent d'organes supplémentaires et constituent l'unité de commande 3 de la machine. L'unité de commande 3 est reliée à un bus périphérique 4 pour permettre des dialogues au moyen de circuits d'interface $5_1$ à $5_L$ avec des périphériques auxiliaires non représentés, et de commander et paramétrer des automates de transferts 6 qui ont pour rôle de contrôler les flots ordonnés sur les bus de la machine.

L'unité de commande 3 est reliée au bus en anneau 2 pour d'une part, paramétrer les traitements des processeurs $1_1$ à $1_N$ (encore appelés processeurs élémentaires ou processeurs esclaves) et d'autre part, collecter leurs résultats. Un deuxième bus de données 7 relie k organes d'entrée $8_1$ à $8_k$, 8 k étant un entier quelconque formés par des convertisseurs analogiques/numériques, aux N+2 processeurs élémentaires. Sur la figure 1, les organes d'entrées sont reliées à k voies de signal et transmettent des échantillons de signal sur le bus 7. Ce bus est unidirectionnel et permet d'alimenter l'un quelconque des N+2 processeurs élémentaires avec des échantillons d'une quelconque des k voies de réception.

Un coupleur 9, relié au bus anneau 2 et à l'unité de commande 3, permet de faire communiquer la machine avec des organes de traitement non représentés situés en aval, tant pour leur fournir les résultats issus du bus en anneau 2 que pour faire remonter par ce bus et vers l'unité de commande 3 les paramètres et logiciels. C'est en effet l'intérêt de cette architecture à plusieurs bus que de permettre par l'unité de commande 3 de diffuser des données et des programmes à tous les autres processeurs élémentaires $1_1$ à $1_N$ et aux automates de transfert 6. L'unité de commande 3 génère une micro-instruction de calcul $\mu l_c$ à destination des N processeurs élémentaires esclaves $1_1$ à $1_N$ sur le bus d'instruction 10. Chaque micro-instruction est codée suivant le code des micro-instructions des processeurs élémentaires.

Les automates transfert 6 génèrent une micro-instruction de transfert $\mu l_T$ sur un bus d'instruction 11, destinée à tous les autres organes sauf les circuits d'interface $5_1$ à $5_L$ des périphériques auxiliaires. Le rôle d'une micro-instruction de transfert $\mu l_t$ est de commander au niveau de chaque organe émetteur de données son activation et de contrôler au niveau de chaque organe récepteur si la donnée lui est destinée et l'endroit où elle doit être rangée, et cela pour chacun des bus de données de la machine. Tous les conflits potentiels liés aux accès mémoire des processeurs sont résolus par les automates transfert 6. Les N processeurs élémentaires esclaves $1_1$ à $1_N$, le coupleur de sortie 9, l'unité de commande 3 et les automates transferts 6 sont synchronisés avec un signal d'horloge H émis par une horloge externe, non représentée, déterminant le cycle de la machine. A chaque cycle les N+2 processeurs réalisent une opération, correspondant à l'envoi d'une micro-instruction de calcul $\mu l_c$ et d'une micro-instruction de transfert $\mu l_t$ indépendante.

A chaque cycle de l'horloge H il est aussi possible de faire transiter une donnée sur le bus acquisition 7 et une donnée entre deux processeurs voisins sur l'anneau 2 pour chacun des N processeurs élémentaires esclaves. Les k convertisseurs analogiques $8_1$ à $8_k$ et les automates de transfert 6 sont synchronisés par une horloge d'échantillonnage, non représentée, de fréquence Fe. Elle permet de synchroniser le flot des échantillons entrant et son transfert sur les processeurs élémentaires esclaves via le bus d'acquisition 7.

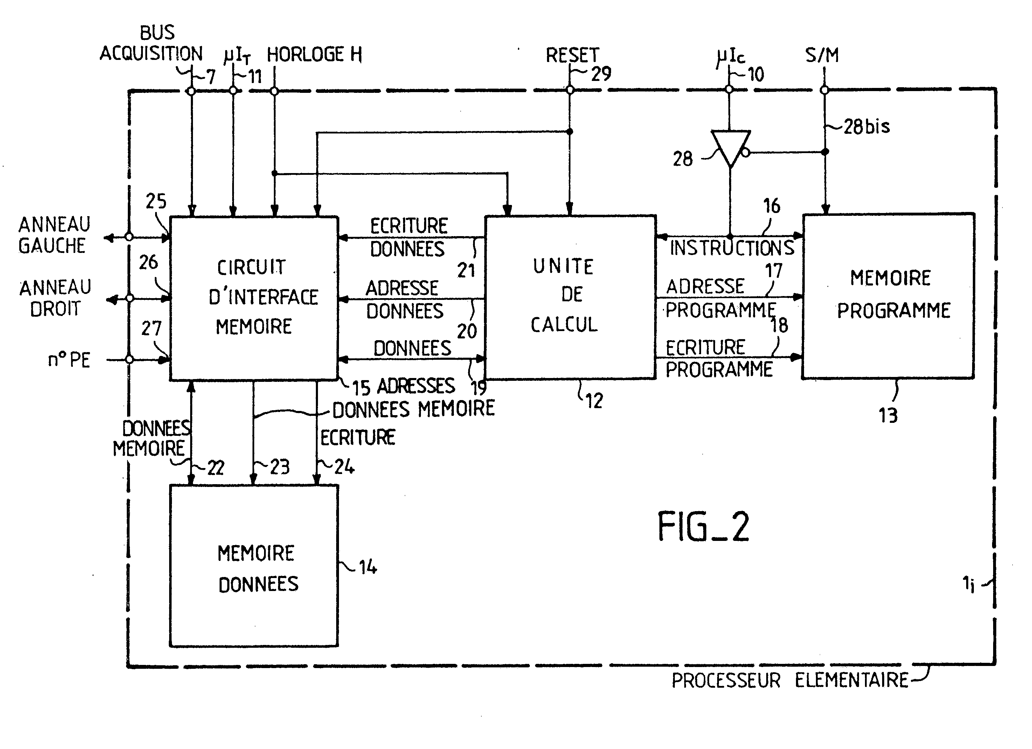

Une structure de base des processeurs $1_1$ à $1_N$ est représentée à la figure 2. Elle correspond à une structure de type Harvard à quatre bus qui a l'avantage de rendre les circuits d'interfaces plus simples et le processeur plus efficace. Toutefois pour ne pas limiter la partie de l'invention aux structures de type Harvard on comprendra qu'une structure classique à deux bus reste envisageable.

Le processeur représenté comprend, une unité de calcul 12 formé par un microprocesseur ou tout dispositif équivalent, couplé d'une part, à une mémoire de programme 13 et d'autre part, à une mémoire de données 14 au travers d'un circuit d'interface mémoire 15. La mémoire de programme 13 est reliée à l'unité de calcul 12 par un bus d'instruction 16, un bus d'adresse 17 et une ligne de commande d'écriture de programme 18. Le circuit d'interface mémoire 15 relie l'unité de calcul 12 au moyen d'un bus de données 19, d'un bus d'adresse de données 20 et d'une ligne de commande d'écriture 21. La mémoire de données 14 est reliée au circuit d'interface mémoire 15 par un bus de données 22, un bus d'adresse 23 et une ligne de commande 24. Le circuit d'interface mémoire 15 est d'autre part relié au bus d'acquisition 7 et au bus de $\mu$ micro-instructions de transfert 11. Il possède également deux ports de connexion gauche et droite 25 et 26 pour permettre l'insertion du processeur dans l'anneau 2 et un port d'identification 27 pour identifier le processeur dans l'anneau par un numéro PE.

Un registre tampon 28 assure l'interface entre le bus de micro-instruction de calcul 10 et le bus d'instructions 16. Une ligne de commande 28 bis assure la commande du processeur en mode SIMD ou MIMD en appliquant un signal d'inhibition S/M des cycles mémoires de la mémoire de programme 13 lorsque le processeur est commandé en mode SIMD par le processeur pilote.

Le circuit d'interface mémoire 15 a pour rôle de rendre le partage de la mémoire de données 14 avec les deux bus d'acquisition 7 et l'anneau 2 transparent pour l'unité de calcul 12.

L'unité de calcul 12 est supposée exécuter toutes les instructions en un cycle d'horloge H et présenter les données à écrire ou demander les données lues toujours au même instant dans un cycle de l'horloge H. Ceci permet au circuit d'interface mémoire 15 d'utiliser au mieux les ressources de la mémoire de données 14. La mémoire 14 possède un temps de réaction inférieur à un demi cycle d'horloge H de façon à pouvoir être utilisée deux fois par cycle, une fois pour l'unité de calcul 12 et une fois pour un des bus de transfert 2 ou 7. Le circuit d'interface mémoire 13 est dans ces conditions synchrone avec l'unité de calcul 12 et reçoit la même horloge de base H. La synchronisation initiale du circuit d'interface mémoire 15 et de l'unité de calcul 12 est obtenue par l'application d'un signal "Reset" d'initialisation par une liaison 29.

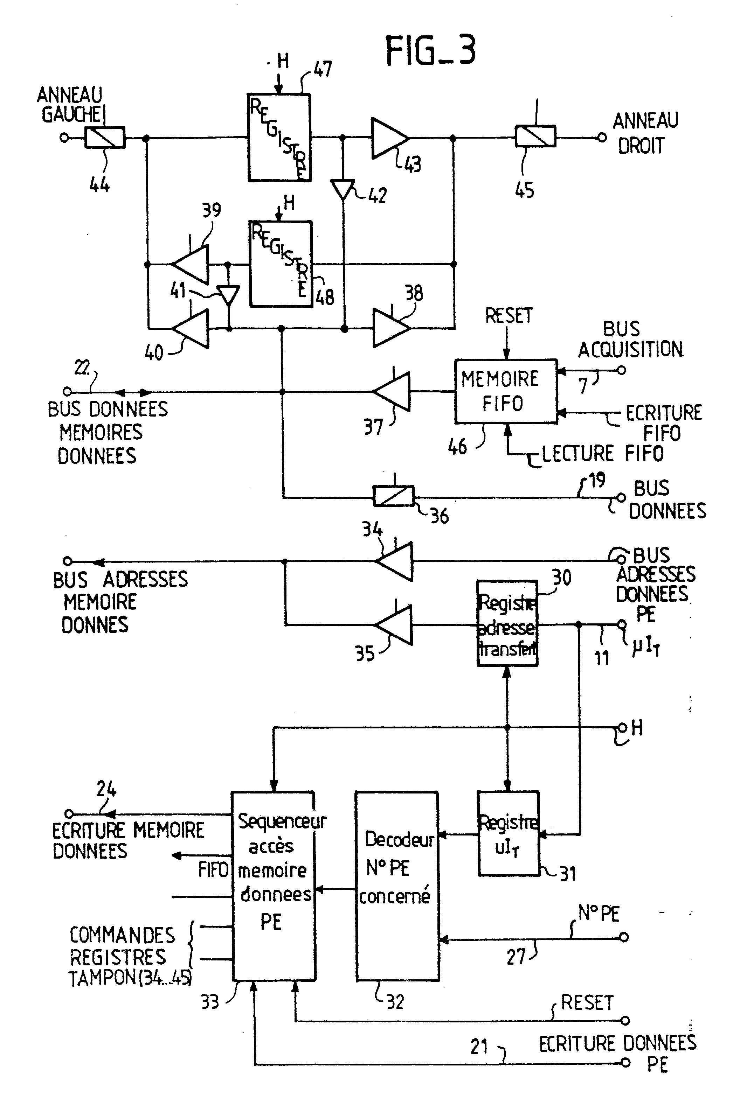

Un exemple de réalisation d'un circuit d'interface mémoire est décrit à la figure 3. Le circuit a pour rôle d'allouer systématiquement pour un demi-cycle de l'horloge H la mémoire données 14 à l'unité de calcul 12 et pour l'autre demi-cycle, d'allouer à l'un des bus de transfert 2 ou 7, selon son activité et selon l'appartenance du processeur élémentaire associé aux groupes des sources ou des destinataires de l'information.

Pour cela le circuit d'interface mémoire 15 reçoit sur la ligne 11 une micro-instruction de transfert "$\mu I_T$ échantillonnée par l'horloge H. Elle contient une partie adresse de la mémoire 14 et une partie instruction, ces deux parties sont mémorisées dans des registres 30 et 31. La partie instruction est décodée par un circuit de décodage 32 et est validée éventuellement par le numéro du processeur élémentaire appliqué sur la liaison 27. Le résultat du décodage est transmis à un séquenceur 33 qui reçoit également un signal d'écriture-lecture par la ligne de commande 21. Le séquenceur 33 élabore au cycle H suivant les commandes des registres tampons référencés de 34 à 45 ainsi que le signal d'écriture-lecture de la mémoire de données appliqué sur la liaison 24. C'est lui qui gère les deux sous-cycles de la mémoire de données.

Les registres tampons 34 et 35 sont validés alternativement pour permettre le transfert à chaque demi-cycle H soit de l'adresse venant de l'unité de calcul 12 soit de l'adresse du transfert contenue dans le registre d'adresse de transfert 30 chargé pour la partie adresse de la micro-instruction de transfert appliquée sur la ligne 11. Un registre tampon bidirectionnel 36 permet pendant le demi-cycle alloué au processeur élémentaire de valider en lecture ou en écriture les données appliquées sur le bus de donnée 19.

L'interface au bus d'acquisition 7 est réalisé à l'aide d'une mémoire tampon d'acquisition 46 du type file d'attente encore connue sous l'appellation FIFO du terme anglo-saxon "First-in First-out" permettant la mise en file d'attente de plusieurs échantillons provenant des convertisseurs analogiques-numériques $8_1$ à $8_k$ avant de les ranger dans la mémoire 14.

L'écriture et la lecture de la mémoire 4 sont commandées par le séquenceur 33 à partir de la partie instruction de la micro-instruction de transfert $\mu I_T$ qui est mémorisée dans le registre 31. Le registre tampon 37 permet à la mémoire 42 d'accéder au bus de données 22 de la mémoire pendant le demi-cycle alloué.

L'interface avec le bus en anneau est constitué de registres tampons 44 et 45 et de deux registres gauche 47 et droite 48.

Le registre de gauche 47 permet la circulation des données sur l'anneau 2 dans le sens gauche vers droite et inversement le registre de droite 48 permet de constituer l'anneau dans le sens droite vers gauche. Les registres tampons 41 et 42 permettent d'écrire dans la mémoire 14 du processeur correspondant les données qui ont circulé sur l'anneau 2 dans un sens pendant que l'anneau 2 est utilisé dans l'autre sens.

Des registres tampons 39 et 40 sont validés alternativement pour permettre soit d'injecter le contenu de la mémoire 14 sur la partie gauche de l'anneau 2, soit d'injecter le contenu de l'anneau droit via le registre 47 sur la partie gauche de l'anneau, soit de valider la circulation droite-gauche de l'anneau 2.

Des registres tampons 43 et 38 jouent des rôles similaires pour l'autre sens de la circulation sur l'anneau.

Les transferts dans les registres 47 et 48 sont synchrones avec les micro-instructions de transfert $\mu I_T$, la synchronisation étant assurée par l'horloge H. Des tampons bidirectionnels 44 et 45 permettent d'une part, d'isoler les tronçons de l'anneau 2 pour les lectures et écritures et d'autre part, d'éviter des conflits aux endroits où il y a plus de deux abonnés sur un tronçon d'anneau. C'est le cas par exemple, pour la liaison des processeurs $1_1$ et $1_N$ qui est commune avec l'unité de commande 3 et le coupleur 9 où il est indispensable de pouvoir établir une liaison coupleur 9 processeur $1_{N+1}$, par exemple, tout en continuant à faire fonctionner l'anneau de manière ouverte entre les processeurs $1_1$ et $1_N$.

Cette structure d'interface permet à chaque cycle de l'horloge H de réaliser simultanément :
- un accès à la mémoire de données 14
- un décalage gauche ou droite de l'anneau 2
- une écriture d'échantillon dans la mémoire tampon d'acquisition 46
- une écriture ou une lecture dans la mémoire 14 en liaison, soit avec la mémoire tampon d'acquisition 46, soit avec la partie gauche l'anneau, soit avec sa partie droite.

Afin de synchroniser tous les processeurs élémentaires le séquenceur 33 du circuit d'interface mémoire ainsi que la mémoire 46 reçoivent un signal "Reset" d'initialisation. Ce signal permet en outre de vider la mémoire tampon 46.

La répartition des accès mémoires acquisition et anneau est résolue globalement au niveau des automates transferts 6 pour l'ensemble des processeurs élémentaires $1_1$ à $1_{N+2}$.

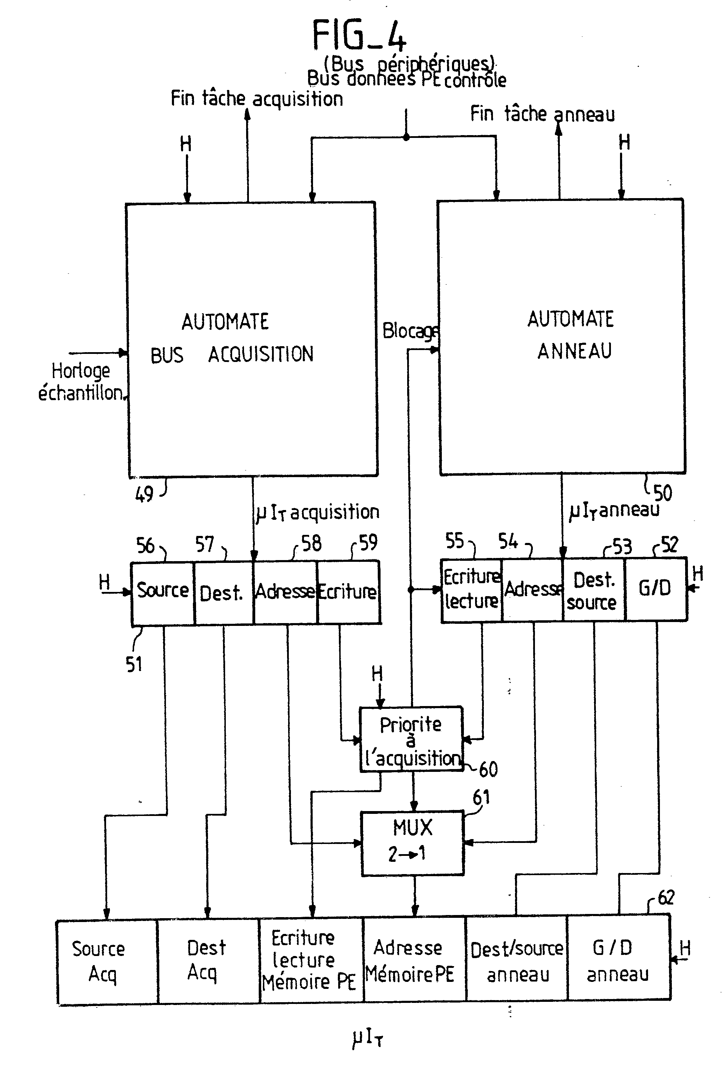

Les automates de transferts représentés sur la figure 4 sont au nombre de deux : un automate 49 pour le bus acquisition et un automate 50 pour l'anneau 2. Chacun d'eux génère une partie de la micro-instruction transfert $\mu I_T$, et ces deux parties sont placées l'une à côté de l'autre pour générer la micro-instruction complète et résoudre les conflits d'accès à la mémoire 14.

Les structures des automates 49 et 50 sont similaires : chaque automate fonctionne au rythme de l'horloge H et génère une micro-instruction de transfert sur le bus d'acquisition 7 ou sur l'anneau 2 qui est synchronisée à l'aide d'un registre d'interface 51 ou 52 au rythme de l'horloge H. Chaque micro-instruction de transfert contient au moins quatre champs, répartis comme suit :
- pour l'anneau
- un champ 52 d'activité de l'anneau à gauche ou à droite
- un champ 53 d'indication de la source ou de la destination du transfert selon le sens du transfert en indiquant le groupe de processeurs élémentaires concernés.
- un champ d'adresse 54 qui est actif lors d'une écriture ou d'une lecture dans la mémoire du processeur élémentaire concerné
- un champ écriture-lecture 55 indiquant le type d'accès à la mémoire
et pour le bus d'acquisition :
- un champ source 56 indiquant le convertisseur analogique-numérique $8_1$ à $8_k$ utilisé
- un champ destination 57 indiquant le groupe de processeurs élémentaires concernés par le transfert
- un champ d'adresse 58 pour l'accès mémoire du processeur élémentaire concerné
et un champ d'écriture 59 pour indiquer un accès en écriture du processeur élémentaire concerné.

Les programmes pour le déroulement des micro-instructions de transfert sur les bus d'acquisition 7 et d'anneau 2 sont indépendants. Cependant il peut se produire des conflits entre ces deux programmes lorsque ceux-ci veulent accéder à une mémoire de données 14 simultanément. Du fait de l'aspect fugitif des échantillons provenant des convertisseurs analogiques-numériques $8_1$ à $8_k$ et de la faible taille réalisable pour la mémoire tampon 46 des circuits d'interface mémoire 15, ce problème est résolu en donnant une priorité supérieure aux accès à la mémoire 14 pour l'acquisition de nombreux échantillons. Ceux-ci prennent le pas sur ceux de l'anneau grâce à un circuit de priorité 60 qui compare à chaque cycle H les demandes d'accès mémoire des deux automates. En cas de conflit, le circuit de priorité 60 donne la priorité à l'acquisition et génère un signal de commande du blocage de l'automate 50 du bus en anneau 2 pendant un cycle de l'horloge H et force de façon connue par cette même commande une "non opération" dans le registre de la micro-instruction courante de l'automate pour le cycle courant. Le résultat est un vol de cycle du transfert sur l'anneau 2 pour permettre l'acquisition des échantillons provenant d'un convertisseur analogique numérique à chaque conflit d'accès mémoire et uniquement dans ce cas là.

Le circuit de priorité 60 commande un circuit multiplexeur 61 qui en fonction du bus élu choisit l'adresse d'accès et le type d'accès mémoire demandés. La micro-instruction de transfert $\mu l_t$ résultante est échantillonnée dans un registre 62 par l'horloge H avant d'être distribuée de façon synchrone au circuit d'interface mémoire 15 de tous les processeurs élémentaires.

La structure de chaque automate de transfert 49 et 50 peut être indifféremment de deux types. Elle peut être obtenue de façon connue, soit à partir de circuits séquenceurs et de générateurs d'adresse, soit simplement à partir d'un compteur de programme et d'une mémoire de micro-instructions.

La première solution permet de réduire la taille du micro-programme pour les répétitions mais limite ces répétitions à ce qui est précâblé.

La deuxième solution nècessite à partir du premier micro-programme une compilation qui génère la liste exhaustive de toutes les micro-instructions pour tous les cycles. Elle permet une plus grande souplesse, au détriment de la taille mémoire, et conduit à une rapidité plus grande et une grande simplicité de réalisation. Elle est très bien adaptée à des applications à grande vitesse où les traitements sont parfaitement déterminés mais très variés avec des récurrences courtes ne nècessitant pas par conséquent trop de mémoire pour la mémorisation des micro-instructions de transfert. Un tel cas pourra par exemple se produire pour certaines applications de radiogoniométrie à interférométrie parallèle où les récurrences sont de l'ordre de quelques dizaines de milliers de cycles.

Dans le cas d'une telle réalisation, la micro-instruction de transfert doit contenir en plus un champ indiquant la fin de la tâche. Cette information sert à bloquer le compteur de programme et à génèrer un signal de fin de tâche à destination du processeur $1_{N+1}$ de l'unité de commande 3. Ceci est naturellement valable pour chacun des deux automates 49 et 50.

Pour lancer une tâche de transfert il faut et il suffit de lui donner l'adresse de début et lui donner l'ordre de démarrer ce qui revient à prépositionner le compteur de l'automate et valider son horloge H qui sera inhibée à la fin de la tâche. Ce lancement est réalisé par le bus périphérique 4 qui sert aussi au téléchargement et à la vérification des mémoires de micro-instructions.

L'horloge d'échantillonnage est utilisée par l'automate d'acquisition pour cadencer les sous-tâches d'acquisition correspondant aux transferts à effectuer entre deux échantillonnages synchrones de toutes les voies de réception.

Enfin les champs destination de la micro-instruction de transfert sur le bus d'acquisition et source et destination de la micro-instruction de transfert sur le bus en anneau 2 sont indépendants et contiennent plus de $|\log_2(n+2)|$ bits pour permettre la sélection des groupes de processeurs élémentaires parmi $n+2$, en plus du choix classique d'un processeur élémentaire parmi $n+2$.

Il est par exemple possible avec $|2 + \log_2(n+2)|$ bits de réaliser les sélections suivantes :
- 1 processeur élémentaire parmi $n+2$
- tous les processeurs élémentaires
- tous les processeurs élémentaires dont le numéro en binaire a le $i^{\text{ème}}$ bit à 1
- tous les processeurs élémentaires dont le numéro en binaire a le $i^{\text{ème}}$ bit à 0
(Ces deux derniers cas sont très utiles, par exemple pour réaliser des échanges entre papillons de l'algorithme en papillon, connu pour le calcul des transformées de Fourrier rapide). et enfin tout motif répétitif sur 4 processeurs élémentaires.

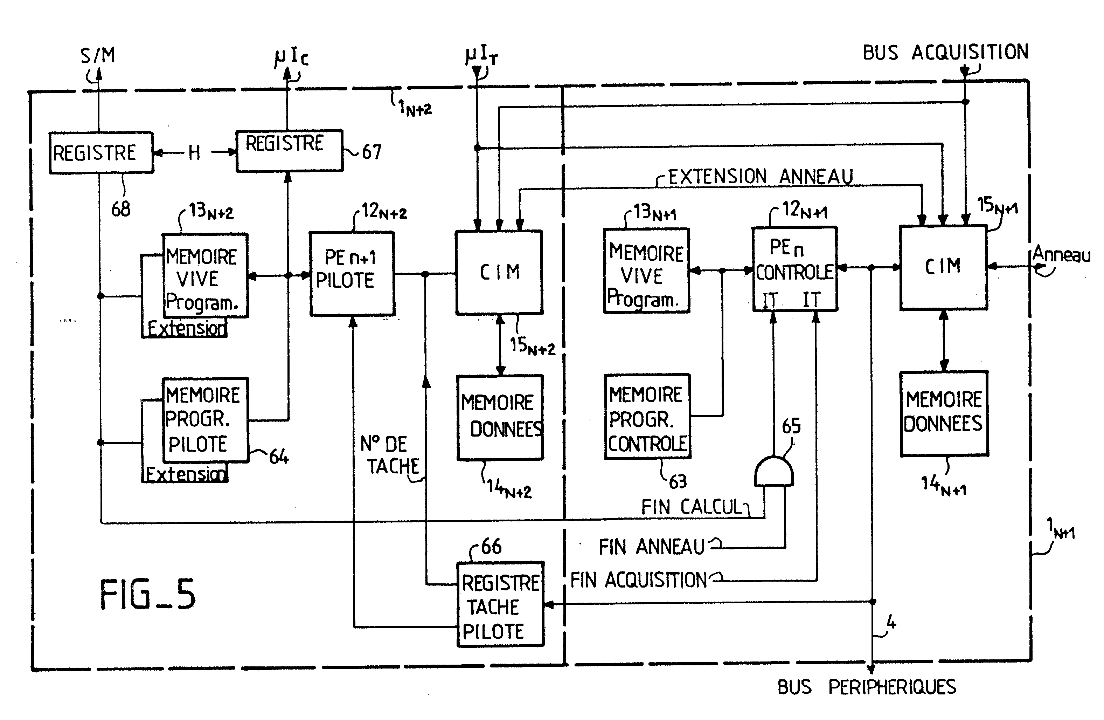

L'unité de contrôle et de commande 3 est représentée à la figure 5. Elle est constituée des processeurs élémentaires $1_{N+1}$ et $1_{N+2}$ qui sont représentés sur la figure 5 à l'intérieur de lignes fermées en pointillées. Les processeurs $1_{N+1}$ et $1_{N+2}$ jouent le rôle de processeur de commande et de processeur pilote pour l'ensemble des processeurs de la machine. Ces processeurs ont une structure de base similaire à celle des processeurs élémentaires $1_1$ à $1_N$.

Le processeur $1_{N+1}$ de commande est relié à l'anneau 2 au niveau du rebouclage de celui-ci sur les processeurs $1_1$ et $1_N$, par la partie droite de son circuit d'interface mémoire $15_{N+1}$. La sortie gauche du circuit d'interface mémoire $15_{N+1}$ crée une extension de l'anneau 2, elle est reliée à la partie droite du circuit d'interface mémoire $15_{N+2}$ du processeur $1_{N+2}$. Cette liaison permet au processeur de commande $1_{N+1}$ de remplir la mémoire de données $14_{N+2}$ du processeur élémentaire pilote $1_{N+2}$ et indirectement sa mémoire programme $13_{N+2}$, sous le contrôle des automates 49 et 50.

En effet comme les processeurs ont la particularité de pouvoir écrire ou lire sur leur bus-programme, il est possible en mode SIMD pour les processeurs esclaves ou à partir d'une mémoire morte de programme, de transférer des programmes des mémoires de données 14 aux mémoires de programme 13.

Des mémoires programmes supplémentaires 63 et 64 permettent à partir d'un simple programme résidant en permanence de type "BOOT STRAPS" de télécharger complètement une application (programme et paramètres) dans les n+2 processeurs élémentaires ainsi que dans les automates 49 et 50 à partir du simple coupleur d'entrée-sortie 9.

La mémoire programme $13_{N+2}$ du processeur élémentaire pilote $1_{N+2}$ est reliée à deux registres d'instruction 67 et 68 et contient en plus une extension de son champ d'instruction destinée, à la commutation des modes de fonctionnement SIMD/MIMD (signal S/M), à la pagination éventuelle de la mémoire donnée 14 des processeurs esclaves et enfin à l'élaboration comme pour les automates transferts 49 et 50 d'un indicateur de fin de calcul destiné au processeur de commande $1_{N+1}$ et câblé sur une ses entrées d'interruption.

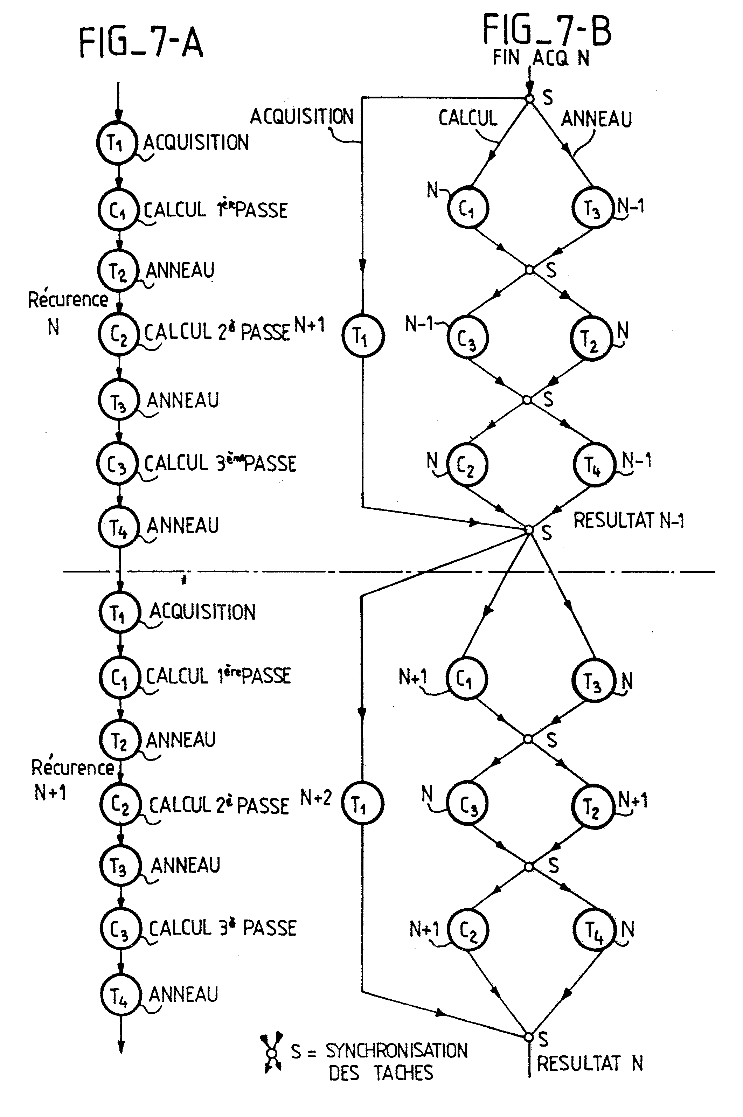

Comme il apparaît sur la figure 7B, beaucoup d'applications conduisent à lancer simultanément une tâche de calcul par le processeur pilote $1_{N+2}$ et une tâche de transfert sur le bus en anneau 2 par l'automate d'anneau 50. Le lancement d'un autre couple de tâches est alors conditionné par la fin des deux précédentes. Ainsi, comme représenté figure 5, le câblage d'un circuit "ET" 65 permettant de prendre en compte des fins de tâches d'anneau et de calcul pour accélérer le temps de réponse du processeur pilote $1_{n+1}$. L'activation d'une nouvelle tâche calcul se fait par un registre de tâche pilote 66 qui est rempli par le processeur $1_{n+1}$ via le bus périphérique 4 et qui contient le numéro de la tâche à lancer. L'écriture du registre 66 provoque une interruption du processeur pilote $1_{N+2}$. Ce dernier démarre le traitement en lisant sur son bus données le numéro de la tâche trouvée dans le registre 66.

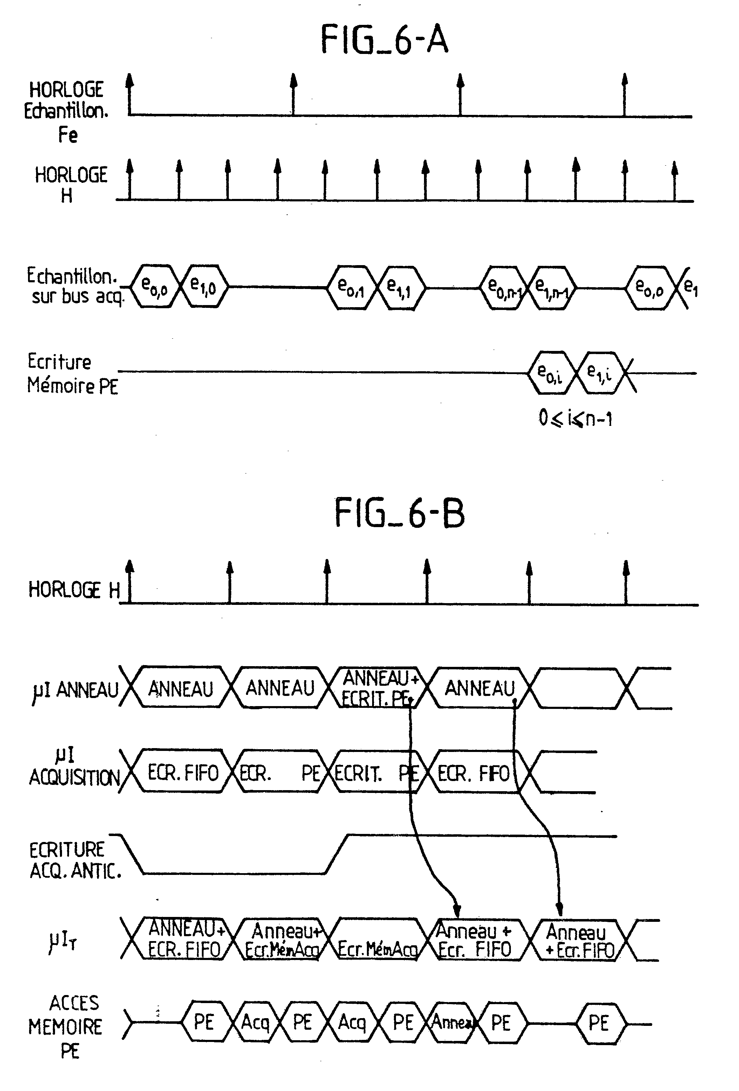

Des exemples de réalisation de transferts d'échantillons sur le bus d'acquisition 7 et de transfert de données sur le bus en anneau 2 sont représentés aux figures 6A et 6B.

Ces exemples correspondent au cas où la machine dispose de k voies de réception échantillonnées à une fréquence Fe de façon synchrone. Pour que la machine puisse exécuter les traitements demandés en temps réel aussi bien aux niveaux des traitements que du flot de données, elle doit pouvoir canaliser tous les échantillons sur le bus acquisition 7 dont le débit est inférieur ou égal à la vitesse Fc de l'horloge H. Pour k voies Fe doit vérifier la relation :

$$Fe < \frac{Fc}{k}$$

L'exemple de la figure 6A correspond seulement au cas où deux voies de réception sont utilisées. Chaque couple d'échantillons est transmis successivement de manière tournante aux différents processeurs élémentaires esclaves $1_1$ à $1_N$.

Sur les deux premiers coups de l'horloge H, qui suivent l'apparition d'un top d'horloge de fréquence Fe, deux échantillons sont écrits dans la mémoire tampon 46 d'un processeur élémentaire puis le processeur élémentaire suivant enregistre le couple d'échantillons suivant. Lorsque les N processeurs élémentaires ont chacun deux échantillons dans leur mémoire tampon 46, deux cycles mémoire des transferts sont effectués pour écrire à chacun d'eux N échantillons dans les mémoires 14 des processeurs en vidant les N mémoires tampons 46 de chacun d'eux avant de recommencer.

Le taux d'occupation des cycles mémoires réservés aux transferts pour l'acquisition des échantillons est indépendant du nombre de voie. Sa valeur maximale, quand Fe.k = Fc est déterminée par le nombre N de processeurs et vaut $(100.\frac{1}{N})\%$. L'incidence de l'acquisition des échantillons sur le temps de réponse d'une tâche effectuée sur l'anneau des processeurs élémentaires $1_1$ à $1_N$ est inversement proportionnelle au nombre de processeurs.

Grâce à la mémoire tampon 46 les N premiers échantillons peuvent être écrits en mémoire pendant que le dernier $(e_1,N-1)$ rentre dans la mémoire tampon du processeur élémentaire $1_N$.

Un exemple de déroulement des instructions de transfert "acquisition-anneau" relativement à des situations de conflits d'accès aux mémoires 14 des processeurs est représenté à la figure 6B.

Afin d'être certain d'obtenir un accès à la mémoire 14 au moment voulu pour l'acquisition des échantillons qui est prioritaire, la demande d'accès pour l'écriture est anticipée d'un cycle de l'horloge H. Ceci est réalisé par la compilation des instructions acquisition. Le dialogue correspondant est inscrit dans l'automate du bus d'acquisition 49.

Ceci permet d'activer le circuit de priorité 60 et de lui laisser un cycle de l'horloge H pour réagir.

De leur côté les micro-instructions de transfert sur le bus en anneau n'ont pas ces contraintes d'écriture. Par contre lors d'un vol du cycle il faut que tous les champs des micro-instructions de transfert sur le bus en anneau 2 soient inhibés et que l'horloge du séquenceur de l'automate en anneau 50 soit bloquée afin de retarder son exécution d'un cycle sans faire avancer l'anneau au risque de décoder les informations à écrire dans la mémoire 14.

La figure 7A donne un exemple d'utilisation de la machine selon l'invention à 4 processeurs esclaves à l'enchaînement des tâches pour réaliser une transformée de Fourier rapide à 8 points suivant l'algorithme papillon connu sous la désignation RADIX 2 sur 8 échantillons de signal et répétitive.

Dans le diagramme représenté $T_1$ désigne une première tâche d'acquisition des échantillons du signal à traiter,
$C_1$ à $C_3$ désignent trois tâches correspondant chacune à un calcul d'une "passe" de la transformée de Fourier rapide.
$T_2$ à $T_4$ désignent trois tâches de transferts de données correspondant au réarrangement effectué

après chaque passe.
- $T_1$ correspond à un transfert pour l'acquisition des échantillons
- $C_1$ à $C_3$ à 3 tâches de calcul.
- $T_2$ à $T_4$ à 3 tâches de transferts sur l'anneau 2.

Une mise en oeuvre préférentielle de ce traitement sur une machine conforme à l'invention est représentée à la figure 7B. Dans cet exemple, il est utilisé ici au maximum le parallélisme auquel se prête la machine pour le traitement simultané, en parallèle de trois tâches de types différents. Dans l'exemple quatre processeurs élémentaires esclaves sont utilisés. Chaque tâche calcul $C_1$ à $C_3$ correspond à l'exécution dans chaque processeur d'un unique "papillon" RADIX 2, chaque processeur ayant ses propres coefficients. Cet exemple est une application typique du fonctionnement de la machine en mode SIMD pour les calculs.

La machine étant dimensionnée pour tenir le temps réel, le temps de réponse après l'arrivée du dernier échantillon est de 2 récurrences. Tel que l'indique la figure 7B, ce délai est la somme des temps de calcul et de transfert sur le bus en anneau 2 qui ne peuvent excéder chacun d'eux 100% de la récurrence.

Dans ces conditions le temps de réponse est faible comparé à celui d'une machine classique MIMD comportant des processeurs élémentaires autonomes et de même puissance mais disposés selon une chaîne en pipeline au rythme de la récurrence. Il faudrait dans ce cas deux processeurs élémentaires par passe et un délai de 3 récurrences (3 passes) sans compter les transferts.

La rentabilité maximale d'une telle machine est obtenue par une découpe des tâches anneaux et calcul en nombre identique, ce qui est naturel puisqu'entre deux tâches calcul il y a des transferts. Les durées des tâches calcul et anneau doivent être les plus voisines possibles. A chaque couple de tâches il faut panacher calcul et transfert correspondant à deux récurrences successives et alterner à chaque lancement de couples.

La tâche transfert, elle, n'est relancée qu'une fois par récurrence. C'est elle qui détermine le rythme de la récurrence à l'unité de commande 3.

## Revendications

1. Machine multiprocesseur reconfigurable pour traitement du signal du type dans laquelle les signaux analogiques à traiter sont reçus de K voies de signal différentes et convertis sous la forme d'échantillons numériques par K convertisseurs analogiques-numériques ($8_1$ à $8_K$) reliés respectivement à chacune des voies caractérisée en ce qu'elle comprend, d'une part, N processeurs élémentaires monolithiques ($1_1$ à $1_N$) de traitement du signal reliés, par l'intermédiaire d'un bus d'acquisition d'échantillons (7) commun à l'ensemble des N processeurs, aux K sorties d'échantillons des K convertisseurs analogiques numériques ($8_1$ à $8_K$) et également reliés par un bus en anneau (2) commun à l'ensemble des N processeurs ($1_1$ à $1_N$) pour permettre la circulation entre processeurs des résultats de calcul effectués sur les échantillons reçus par chacun d'eux et d'autre part, une unité de commande (3) et au moins un automate de transfert (6), synchronisés par un signal d'horloge commun pour commander respectivement d'une part l'exécution des calculs à effectuer par les processeurs ($1_1$ à $1_N$) sur les échantillons qu'ils reçoivent ainsi que d'autre part, le transfert des échantillons sur le bus d'acquisition (7) et le transfert des résultats de calcul entre processeurs sur le bus en anneau (2), chaque processeur dispose d'une unité de calcul (12) et d'une mémoire de programme (13), l'unité de calcul (12) pouvant exécuter indifféremment des tâches de calcul en mode SIMD ou MIMD sous la commande d'une instruction provenant de l'unité de commande (3), des instructions contenues dans sa propre mémoire de programme (13) (mode MIMD) ou des instructions fournies par l'unité de commande (3) (mode SIMD).

2. Mémoire selon la revendication 1 caractérisée en ce que chaque processeur comprend en plus, d'une part, une mémoire de données (14) et d'autre part, un circuit d'interface mémoire (15) pour coupler indifféremment la mémoire de données (14) à l'unité de calcul (12) ou au bus en anneau (2).

3. Machine selon les revendications 1 à 2 caractérisée en ce que l'automate de transfert comprend un premier automate (49) et un deuxième automate (50) pour transmettre sur un bus de micro-instruction de transfert (11) commun à tous les processeurs ($1_1$ ... $1_N$) des micro-instructions de commande pour commander respectivement le transfert des échantillons sur le bus d'acquisition (7) et le transfert interprocesseur des données sur le bus en anneau (2).

4. Machine selon la revendication 3 caractérisée en ce que l'automate de transfert (6) comprend un circuit de priorité (60) pour commander le blocage du deuxième automate lorsqu'un transfert d'échantillons est à effectuer sur le bus d'acquisition (7).

5. Machine selon l'une quelconque des revendications 1 à 4 caractérisée en ce que l'unité de commande (3) comprend un processeur pilote ($1_{N+2}$) et un processeur de commande ($1_{N+1}$) de structures similaires à celles des N processeurs élémentaires de traitement du signal ($1_1$ à $1_N$) disposés sur l'anneau (2), les processeurs pilote ($1_{N+2}$) et de commande ($1_{N+1}$) étant reliés entre eux et au bus en anneau (2) par leur circuit d'interface ($15_{N+1}$ ... $15_{N+2}$).

6. Machine selon l'une quelconque des revendications 1 à 5 caractérisée en ce que chaque processeur élémentaire ($1_i$) peut exécuter en parallèle et indépendamment des autres tâches exécutées par les autres processeurs ($1_1$ ... $1_N$) de la machine une tâche de calcul en mode MIMD ou en mode SIMD, une tâche d'acquisition de données sur le bus d'acquisition (7) ou encore une tâche de transfert sur le bus en anneau (2), les tâches de calcul étant exécutées séquentiellement sous la commande du processeur pilote ($1_{N+z}$), les tâches d'acquisition et de transfert étant exécutées séquentiellement sous les commandes respectives du premier (49) et deuxième automate (50), l'enchaînement des tâches étant exécutées par le processeur de commande ($1_{N+1}$).

7. Machine selon l'une quelconque des revendications 3 à 5, caractérisée en ce que le format de chaque micro-instruction de commande d'un transfert sur le bus d'acquisition comprend au moins un premier champ source (56) pour indiquer le convertisseur analogique numérique utilisé, un deuxième champ (57) pour indiquer le groupe de processeurs élémentaires ($1_1$ à $1_N$) concernés par le transfert, un troisième champ (58) d'adresse pour l'accès à la mémoire du processeur élémentaire concerné, et un quatrième champ (59) pour indiquer un accès en écriture du processeur élémentaire concerné, et en ce que le format de chaque micro-instruction de commande d'un transfert sur le bus en anneau (2) comprend au moins un cinquième champ (52) d'activité de l'anneau pour effectuer le suivant un premier sens ou un deuxième sens, un sixième champ (53) pour indiquer la source ou la destination du transfert selon le sens du transfert et indiquant le groupe de processeurs élémentaires ($1_1$ à $1_N$) concernés, un septième champ (54) actif lors d'une écriture ou d'une lecture dans la mémoire du processeur élémentaire concerné, d'un huitième champ (55) d'écriture/lecture indiquant le type d'accès à la mémoire du processeur élémentaire concerné, l'ensemble des champs étant concaténé pour former une micro-instruction unique et permettre de particulariser des sous groupes de processeurs élémentaires pour le transfert sur l'anneau (2) et l'acquisition sur le bus (7), permettre le traitement de signaux dont les algorithmes de traitement présentent des symétries particulières.

FIG_1

EP 0 315 529 A1

FIG_2

EP 0 315 529 A1

EP 0 315 529 A1

FIG_3

# FIG_4

(Bus périphériques)
Bus données PE contrôle

FIG_5

# FIG_6-A

HORLOGE
Echantillon.
Fe

HORLOGE
H

Echantillon.
sur bus acq.

$e_{0,0}$ $e_{1,0}$ $e_{0,1}$ $e_{1,1}$ $e_{0,n-1}$ $e_{1,n-1}$ $e_{0,0}$ $e_1$

Ecriture
Mémoire PE

$e_{0,i}$ $e_{1,i}$

$0 \leqslant i \leqslant n-1$

# FIG_6-B

HORLOGE H

µI ANNEAU
ANNEAU ANNEAU ANNEAU + ECRIT. PE ANNEAU

µI
ACQUISITION
ECR. FIFO ECR. PE ECRIT. PE ECR. FIFO

ECRITURE
ACQ. ANTIC.

µI_T
ANNEAU+ ECR. FIFO Anneau+ Ecr.MémAcq Ecr.MémAcq Anneau + Ecr. FIFO Anneau + Ecr.FIFO

ACCES
MEMOIRE
PE
PE Acq PE Acq PE Anneau PE PE

EP 0 315 529 A1

FIG_7-A

FIG_7-B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 147 857  (HITACHI) <br> * en entier *  <br> --- | 1 - 3 | G 06 F  15/06 <br> G 06 F  15/31 |
| A | ELECTRONIQUE ET APPL. INDUSTR. <br> no. 284, mai 1980, page 39 - 42; P. SCHWARTZ: " Pour l'étude mécanique de structures, un analyseur FFT multivoies transportable" * page 40, colonne 2 - 3, rubrique: Structure du 6080; figure 1 * <br> --- | 1 | |
| A | PATENT ABSTRACTS OF JAPAN <br> vol. 8, no. 105 (P-274) (1542), 17 mai 1984; & JP - A 59 016 071 (TOKYO SHIYAURA DENKI K.K.), 27-01-84 * en entier * <br> --- | 1, 6 | |
| A | IEEE TRANSACTIONS ON INDUSTRIAL ELECTRONICS <br> vol. IE-29, no. 3, août 1982, pages 202 - 206; J. TENENBAUM et al.: "A Tri-State Oriented Parallel Processing System" * page 203, colonne gauche, ligne 6 - page 204, colonne gauche, ligne 12; figures 1, 2 * <br> --- | 1 - 3, 5, 6 | |
| D,A | GB-A-2 157 860  (THOMSON-CSF) <br> * en entier * <br> --- | 1 - 3 | DOMAINES TECHNIQUES RECHERCHES (Int. Cl.4) <br><br> G 06 F  15/06 <br> G 06 F  15/31 <br> G 06 F  15/332 <br> G 06 F  15/336 <br> G 06 F  15/20 <br> G 06 F   9/38 |
| A | EP-A-0 236 762  (HITACHI) <br> * en entier * <br> --- | 1 - 3 | |
| A | US-A-4 241 411  (KRASNER et al.) <br> * en entier * <br> ----- | 1 - 3 | |

Le présent rapport a été établi pour toutes les revendications

| Lieu de la recherche | Date d'achèvement de la recherche | Examinateur |
|---|---|---|
| BERLIN | 09-01-1989 | DURAND J. |